(19) Europäisches Patentamt
European Patent Office
Office européen des brevets

(11) **EP 3 502 973 A1**

(12) **EUROPEAN PATENT APPLICATION**

(43) Date of publication:
**26.06.2019 Bulletin 2019/26**

(51) Int Cl.:
***G06N 3/04*** *(2006.01)*   ***G06N 3/08*** *(2006.01)*

(21) Application number: **17306832.1**

(22) Date of filing: **19.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **InterDigital CE Patent Holdings 75017 Paris (FR)**

(72) Inventors:
• **REINHARD, Erik**
**35576 Cesson-Sévigné (FR)**
• **SEIFI, Soroush**
**42023 Saint-Etienne (FR)**
• **PEREZ, Patrick**
**35576 Cesson-Sévigné (FR)**

(74) Representative: **Huchet, Anne et al InterDigital CE Patent Holdings 20, rue Rouget de Lisle 92130 Issy-les-Moulineaux (FR)**

(54) **NEURAL NETWORK AND METHOD FOR TRAINING THE NEURAL NETWORK, CORRESPONDING COMPUTER PROGRAM PRODUCTS AND DEVICES**

(57)    A neural network (200) is proposed comprising a set of N layers of nodes, N an integer greater than or equal to 3. An output of at least one node of a layer of rank $i$ in the set of N layers is connected to an input of at least one node of a layer of rank $i + 1$ in the set of N layers, $i$ an integer verifying $i \in [1, N[$. For at least one value of an integer $l$ verifying $l \in [1, N - 2]$, the neural network also comprises, for at least one couple $(l, k)$, $k$ an integer verifying $k \in [l + 2, N]$, a backward connection (210) connecting:
- an output of a layer of rank $k$ in the set of N layers; toward
- an input of a layer of rank $l$ in the set of N layers.

Figure 2

EP 3 502 973 A1

## Description

## 1. FIELD OF THE DISCLOSURE

The field of the disclosure is that of neural networks.

More specifically, the disclosure relates to a particular architecture of neural network and to a method for training such a neural network that yields superior accuracy while using a smaller training set.

The disclosure can be of interest in any field where neural networks are used and where their training is a critical step (e.g. during deep learning). This can be the case for instance in a variety of fields such as data compression, feature extraction, object recognition and classification, etc.

## 2. TECHNOLOGICAL BACKGROUND

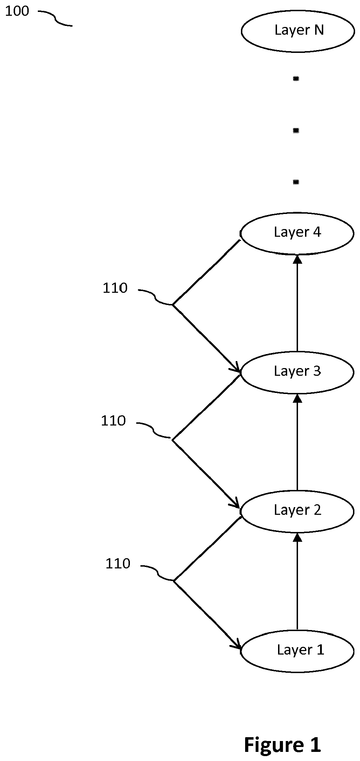

A classical architecture of a neural network is illustrated in **figure 1**. Such known neural network 100 comprises a set of N layers of nodes, with N being an integer. An output of a node of the layer of rank $i$ in the set of N layers is connected to an input of a node of the layer of rank $i + 1$, $i$ an integer verifying $i \in [1, N[$. Classically, the layer of rank 1 is called the input layer, the layer of rank N is called the output layer and all other layers in between the input and the output layers are called hidden layers.

The input data provided to the input layer are then processed by the nodes of the input layer for delivering first output data to the input of the second layer of nodes. Following this scheme, the data propagates forwardly based on the activation of nodes in successive layers of increasing rank up to the output layer.

Such classical structure is generic in the meaning that it can implement neural networks of various kinds as for instance restricted Boltzmann machines, auto-encoders (i.e. neural networks which are trained to learn efficient encodings, typically used for dimensionality reduction), or stacked auto-encoders (i.e. neural networks made up of multiple auto-encoders).

Such known neural network 100 also comprises backward connections 110 connecting the output of each layer of rank $i$ greater or equal than 2 toward an input of the layer of rank $i - 1$ (i.e. the layer just preceding). Such known backward connections 110 allow for training (i.e. the determination of the parameters/weights of the activation function of the nodes of the layers) the neural network 100.

More particularly, the training of such known neural network 100 is classically a two-step process:

- Pre-training step: in order to estimate the parameters/weights of the activation functions of the nodes in the layers, initially the first layer of the network is trained based on the processing of a training sequence. Then the first layer is used to transform the raw input into a vector consisting of activation of the hidden units which will be used for training the second layer. This procedure is repeated for all the subsequent layers, using the output of each trained layer as input for the training of the subsequent untrained layer. Therefore, the training dataset is used (at least) once for the training task of each of the layers in the network. This means that for a network with N layers, at least N passes of the training dataset are necessary for the pre-training step;

- Fine-training step: After all the layers are pre-trained, a fine-tuning step is performed which modifies the parameters/weights of the activation functions of the nodes of all the layers according to a classical back propagation algorithm. The fine-tuning can be done either with supervision, where the goal can be for instance object classification, or without supervision where the final layer should be able to reconstruct the input of the stacked auto encoder.

Such a classical training scheme is for instance illustrated in the context of auto-encoders in the article by Bengio, Y., Lamblin, P., Popovici, D., & Larochelle, H. (2007) "Greedy layer-wise training of deep networks," Advances in neural information processing systems 19, 19, 153. Finally, for a network with N layers, at least N+1 passes of the training dataset are necessary for the overall training.

Attempts have been made in order to reduce the complexity of the training of neural networks. For instance, still in the context of auto-encoders, Vincent, P., Larochelle H., Bengio Y., & Manzagol P.A., introduced in 2008 in "Extracting and composing robust features with denoising autoencoders," 25th international conference on Machine learning, ACM, the concept of denoising auto-encoders and consequently of stacked denoising auto-encoders. He showed that stacked denoising auto encoders tend to learn more useful features from the input by introducing noise to the input of each auto encoder in the architecture. In this case, each auto encoder should be able to reconstruct a clean/denoised variation of its input after being trained on noisy training examples.

In the same way, Qi, Y., Wang, Y., Zheng, X., & Wu, Z. derived in 2014 in "Robust feature learning by stacked autoencoder with maximum correntropy criterion," IEEE International Conference on Acoustics, Speech and Signal Processing (ICASSP), 6716-6720, a robust stacked auto-encoder by replacing mean squared error (MSE) as the reconstruction loss of each auto-encoder with maximum correntropy criterion (MCC). Correntropy is defined as a localized similarity measure which is less sensitive to the noise and outliers in comparison with MSE, therefore such modification is shown to improve the anti-noise ability of stacked auto encoders.

The two aforementioned studies tend to improve the accuracy of a stacked auto encoder. However, they rely on the same general training principles as discussed above (two-step approach) thus leading to the same complexity at the end.

There is thus a need for a method for training a neural network that leads to an improved quality of the trained network while reducing the number of training sequences that need to be used.

## 3. SUMMARY

A particular aspect of the present disclosure relates to a device comprising a processor or a dedicated computing machine configured for implementing a neural network comprising a set of N layers of nodes, N being an integer greater than or equal to 3. An output of at least one node of a layer of rank $i$ in the set of N layers being connected to an input of at least one node of a layer of rank $i + 1$ in the set of N layers, $i$ an integer verifying $i \in [1, N[$. For at least one value of an integer $l$ verifying $l \in [1, N - 2]$, the neural network also comprises, for at least one couple $(l, k)$, $k$ an integer verifying $k \in [l + 2, N]$, a backward connection (210) connecting:

- an output of a layer of rank $k$ in the set of N layers; toward
- an input of a layer of rank $l$ in the set of N layers.

Thus, the present disclosure proposes a new and inventive solution for improving the training of a neural network (e.g. a stacked auto-encoder, a restricted Boltzmann machine, etc.) comprising at least 3 layers (e.g. an input layer, an output layer, and at least one hidden layer).

For this, it is proposed to add at least one backward connection between the output of a given layer of rank $k$, and the input of another layer of rank $l$ not just preceding the layer of rank $k$. As such, the backward connection skips at least one layer that is between the two considered layers of rank $l$ and $k$.

More particularly, such backward connection allows improving the training of the layer of rank $l$ in the neural network, as discussed below in relation with the disclosed method for training such neural network. This results in the use of fewer training sequences while improving the quality of the trained network at the end.

According to one embodiment, the neural network also comprises, for at least one couple $(l, k')$, $k'$ an integer different from $k$ and verifying $k' \in [l + 1, N]$, a backward connection connecting:

- an output of a layer of rank $k'$ in the set of N layers; toward
- the input of the layer of rank $l$ in the set of N layers.

Thus, the use of further backward connections that go toward the input of the layer of rank $l$ allows improving further the training of that particular layer of rank $l$.

According to one embodiment, the neural network comprises:

- the backward connection associated to the couple $(l, k)$; and
- for each possible value of $k'$ in $[l + 1, N]$, the backward connection associated to the couple $(l, k')$.

According to one embodiment, the neural network comprises, for each possible value of $l$ in $[1, N - 2]$:

- the backward connection associated to the couple $(l, k)$, and when existing
- the backward connections associated to the couple(s) $(l, k')$ as disclosed above.

Thus, the presence of backward connections that go toward the input of different layers of rank $l$ allows enforcing the disclosed method for training all those layers of rank $l$, thus improving the overall training of the neural network.

Another aspect of the present disclosure relates to a method for training a neural network implemented in a device as disclosed above (according to any of its embodiment). The method comprises, for the at least one couple $(l, k)$:

- Feeding a training sequence $I$ to an input of a layer of rank 1 in the set of N layers of nodes;
- Propagating the training sequence $I$ forwardly through layers of rank 1 to $k$ in the set of N layers, delivering at least:

    - an output signal $H^k$ at an output of the layer of rank $k$; and,
    - when $l$ is greater than 1, an output signal $H^{l-1}$ at an output of a layer of rank $l - 1$;

- Estimating at least an input signal $R_k^l$ at an input of the layer of rank $l$ based on the output signal $H^k$ and on a backward transfer function associated to the backward connection associated to the at least one couple $(l, k)$, the backward transfer function being a function at least of a $l$-th set of parameters characterizing the layer of rank $l$;
- Obtaining at least an error signal $E_k(l)$ between the input signal $R_k^l$ and:

    - the output signal $H^{l-1}$ when $l$ is greater than 1; or
    - the training sequence $I$ when $l$ is equal to 1, delivering a loss function that is function at least of the error signal $E_k(l)$; and

- Adapting at least the $l$-th set of parameters (or weights) characterizing the layer of rank $l$ by optimization of the loss function, delivering a $l$-th adapted set of parameters (or weights).

Another aspect of the present disclosure thus relates to a method for training a neural network with a topology as discussed above, i.e comprising at least 3 layers with, at least, one backward connection between the output of the layer of rank $k$, and the input of the layer of rank $l$ not just preceding the given layer.

More particularly, a backward transfer function associated to the considered backward connection is dependent on the parameters characterizing the layer of rank $l$. Consequently, the optimization of the error signal derived based on this backward transfer function allows estimating those parameters. At the same time, the use of information coming from subsequent layers not just after the layer of rank $l$ allows estimating those parameters in an improved manner compared to known solutions.

This results in the use of fewer training sequences while improving the quality of the trained network at the end.

According to one embodiment, the estimating comprises, for $p$ an integer lower than or equal to $k$ and greater than $l$, an estimation of an input signal $R_k^p$ at an input of a layer of rank $p$ based at least on:

- the output signal $H^k$; and
- a $p$-th decoding function estimating an input of the layer of rank $p$ based on an output of the layer of rank $p$, the $p$-th decoding function being a function at least of a $p$-th set of parameters characterizing the layer of rank $p$.

Thus, the backward transfer function is estimated based on the decoding function of each of the layers between the considered layers of ranks $l$ and $k$, thus resulting in a straightforward implementation.

Furthermore, the disclosed method relies on the use of classical parameters of the layers and thus do not necessitate additional material.

According to one embodiment, the input signal $R_k^p$ is estimated iteratively following:

- $$R_k^p = R_k^k = S^k \left( \left( \left( W^k \right)^T H^k \right) + b'^k \right) \text{ when } p = k; \text{ and}$$

- $$R_k^p = S^p \left( \left( \left( W^p \right)^T R_k^{p+1} \right) + b'^p \right) \text{ for successive values of } p \text{ starting from } k - 1 \text{ down to } l;$$

with:

- $W^p$ a weight matrix of the layer of rank $p$;
- $b'^p$ a decoding offset of the layer of rank $p$; and
- $S^p$ an activation function of the layer of rank $p$ applying a given activation function to each of the components of the argument of the activation function $S^p$. The $p$-th set of parameters characterizing the layer of rank $p$ comprises the weight matrix $W^p$, the decoding offset $b'^p$ and the activation function $S^p$.

In variants, the given activation function belongs to the group comprising:

- a sigmoid function;
- a hyperbolic tangent function; and
- a rectified linear unit function.

According to one embodiment, the propagating comprises calculating iteratively output signals $H^p$ at outputs of rank $p$ layers following:

- $H^p = H^1 = S^1 \left( \left( W^1 I \right) + b^1 \right)$ when $p = 1$; and
- $H^p = S^p \left( \left( W^p H^{p-1} \right) + b^p \right)$ for successive values of $p$ starting from 2 up to $k$;

with:

- $W^p$ the weight matrix of the layer of rank $p$;
- $b^p$ an encoding offset of the layer of rank $p$; and
- $S^p$ the activation function of the layer of rank $p$.

The p-th set of parameters characterizing the layer of rank $p$ also comprises the encoding offset $b^P$.

According to one embodiment, the neural network comprising the backward connection associated to the couple $(l, k')$:

- the propagating also delivers an output signal $H^{k'}$ at an output of the layer of rank $k'$;
- the estimating also comprises estimating an input signal $R_{k'}^l$ at an input of the layer of rank $l$ based on the output signal $H^{k'}$ and on another backward transfer function associated to the backward connection associated with the at least one couple $(l, k')$, the another backward transfer function being a function of at least the $l$-th set of parameters characterizing the layer of rank $l$; and
- the obtaining also comprises obtaining another error signal $E_{k'}(l)$ between the input signal $R_{k'}^l$ and:

  - the output signal $H^{l-1}$ when $l$ is greater than 1; or
  - the training sequence $I$ when $l$ is equal to 1;

the loss function being also a function of the another error signal $E_{k'}(l)$.

Thus, the use of further backward connections toward the layer of rank $l$ allows improving further the training of the layer of rank $l$.

According to one embodiment, the neural network comprises for each possible value of $k'$ in $[l + 1, N]$, the backward connection associated to the couple $(l, k')$. The propagating, the estimating and the obtaining are enforced for each of the backward connection(s) associated to the couple(s) $(l, k')$, delivering respectively a set of output signal(s) $H^{k'}$, a set of input signal(s) $R^l_{k'}$, and a set of error signal(s) $E_{k'}(l)$ for respective value(s) of $k'$. The loss function is also a function of the error signal(s) $E_{k'}(l)$.

According to one embodiment, the adapting the $l$-th set of parameters characterizing the layer of rank $l$ comprises the optimization of the loss function enforcing a stochastic gradient descent method or an Adam optimizer for delivering the $l$-th adapted set of parameters.

Thus, the implementation of the method is simple and robust.

According to one embodiment, the steps of the method for training (in any of its embodiments disclosed above) are enforced iteratively for successive training sequences. The $l$-th set of parameters characterizing the layer of rank $l$ are initialized to:

- default values for the first iteration of the method; and
- the $l$-th adapted set of parameters for the enforcement of a next iteration of the method.

Thus, the training is improved when performed iteratively with different training sequences while requiring less of those training sequences for reaching a given quality of the trained network.

For instance, the weight matrices are initialized with random values, and the decoding and encoding offsets are initialized to zero.

According to one embodiment, the neural network comprises, for each possible value of $l$ in [1, $N$ - 2], the backward connection associated to the couple ($l$, $k$) and, when existing, the backward connections associated to the couple(s) ($l$, $k'$). The propagating, the estimating and the obtaining are enforced iteratively for each possible value of $l$ in decreasing order. For a given possible value of $l$, the propagating, the estimating and the obtaining are enforced for:

- each backward connection associated to the couple ($l$, $k$), delivering respectively a set of output signals $H^k$, a set of input signals $R^l_k$ and a set of error signals $E_k(l)$ for respective values of $k$; and, when existing,
- each of the backward connection(s) associated to the couple(s) ($l$, $k'$), delivering respectively a set of output signal(s) $H^{k'}$, a set of input signal(s) $R^l_{k'}$ and a set of error signal(s) $E_{k'}(l)$ for respective value(s) of $k'$. The loss function is also function of the error signals $E_k(l)$ and $E_{k'}(l)$.

Thus, the training is further improved when the method is enforced iteratively for successive layers of decreasing rank for which at least one backward connection goes toward their inputs. Indeed, due to the backpropagation of the error signal for optimizing the parameters of the layer in the disclosed method, the adaptation of the parameters of a layer of given rank takes advantage of the former adaptation of the parameters of a layer of higher rank.

Another aspect of the present disclosure relates to a computer program product comprising program code instructions for implementing the above-mentioned neural network (in any of its different embodiments) and/or for implementing the above-mentioned method for training (in any of its different embodiments), when said program is executed on a computer or a processor.

Another aspect of the present disclosure relates to a device for training a neural network (in any of its different embodiments).

Such a device is configured for implementing the method for training a neural network according to the present disclosure (in any of its different embodiments). Thus, the features and advantages of this device are the same as those of the method for training described above. Therefore, they are not detailed any further.

## 4. LIST OF FIGURES

Other features and advantages of embodiments shall appear from the following description, given by way of indicative and non-exhaustive examples and from the appended drawings, of which:

- Figure 1 illustrates a known neural network already discussed above in the technological background section;
- Figure 2 illustrates a neural network according to one embodiment of the present disclosure;
- Figure 3 illustrates the structural blocks of an exemplary device that can be used for implementing a neural network according to the disclosure;
- Figure 4 illustrates a flowchart of a method for training the neural network of figure 2 according to one embodiment of the present disclosure;
- Figure 5 illustrates an exemplary device that can be used for implementing the method of figure 4.

## 5. DETAILED DESCRIPTION

In all of the figures of the present document, the same numerical reference signs designate similar elements and steps.

The disclosed technique relates to a neural network that comprises at least one backward connection between the output of a layer of given rank and the input of a layer that is not the one just preceding the considered layer of given rank.

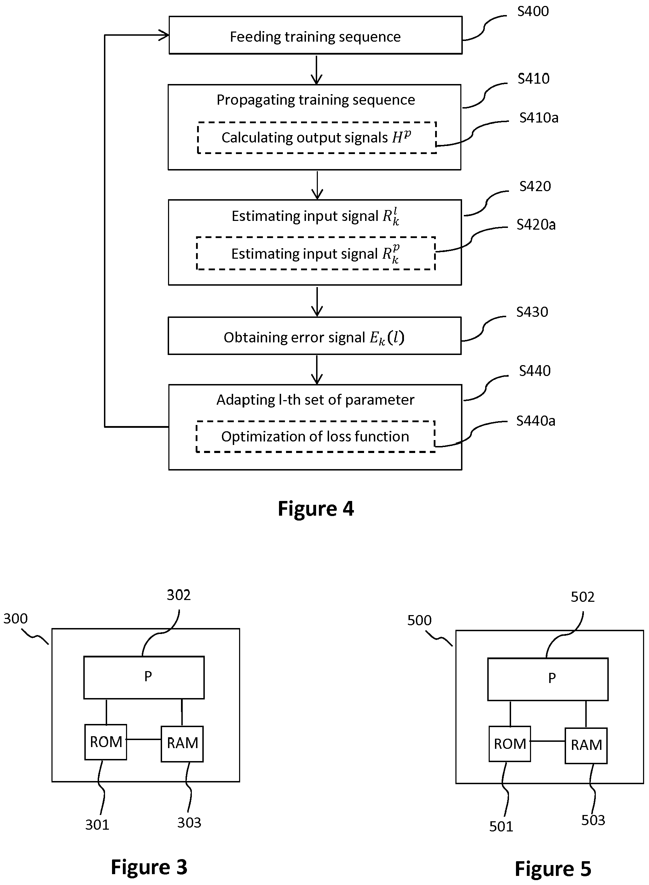

Compared to the known neural network 100 discussed above in relation with figure 1, the presence of such additional backward connections allows enforcing a training method that takes into account for additional error terms in the loss function to be optimized as discussed below in relation with figure 4. This results in the use of fewer training sequences while improving the quality of the trained network at the end.

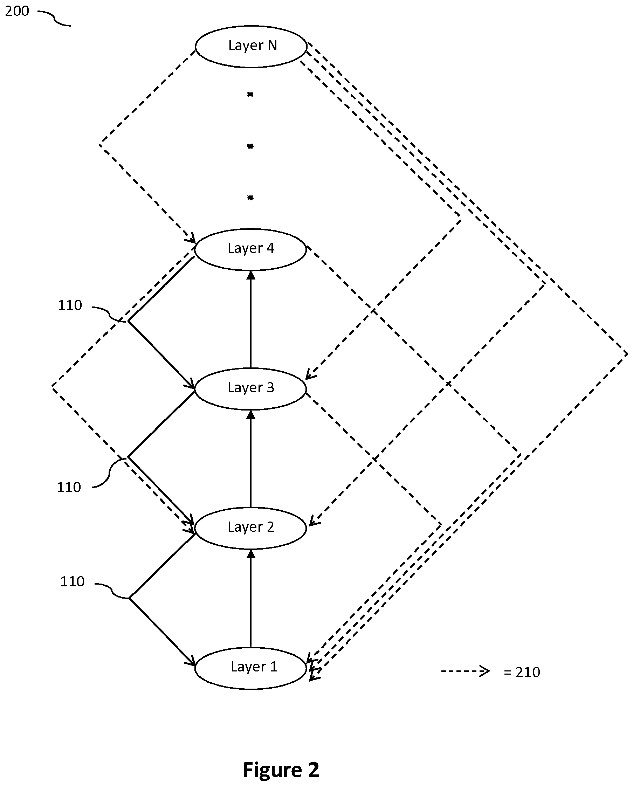

Referring now to **figure 2**, we illustrate a neural network 200 according to one embodiment of the present disclosure.

More particularly, the neural network 200 comprises a set of N layers of nodes, N being an integer greater than or equal to 3. An output of at least one node of a layer of rank $i$ in the set of N layers is connected to an input of at least one node of a layer of rank $i + 1$ in the set of N layers, $i$ an integer verifying $i \in [1, N[$.

For all values of an integer $l$ verifying $l \in [1, N - 2]$, the neural network 200 also comprises, for all couples $(l, k)$, $k$ an integer verifying $k \in [l + 2, N]$, a backward connection 210 connecting:

-   an output of a layer of rank $k$ in the set of N layers; toward
-   an input of a layer of rank $l$ in the set of N layers.

As a result, such backward connection 210 associated to the couple $(l, k)$ skips at least one layer that is between the two considered layers of rank $l$ and $k$.

Moreover, the neural network 200 also comprises for all couples $(l, k')$, $k'$ an integer different from $k$ and verifying in the illustrated embodiment $k' = l + 1$, a backward connection 110 connecting:

-   an output of a layer of rank $k'$ in the set of N layers; toward
-   the input of the layer of rank $l$ in the set of N layers.

Such later backward connection 110 is thus of the same kind as in the known architecture discussed above in relation with figure 1.

Furthermore, having that $l$ can take any value in $[1, N - 2]$, we get a backward connection between an output of each layer of rank greater than 1 in the network 200, and an input of each of the preceding layers.

In other non-illustrated embodiments, the neural network according to the disclosure comprises only some of the above-mentioned backward connections as long as it comprises at least one backward connection 210 between the output of a layer of given rank and the input of a layer that is not the one just preceding the considered layer of given rank.

For instance, in a **first non-illustrated embodiment,** the neural network according to the disclosure comprises, for one value of $l \in [1, N - 2]$ and for one value of $k \in [l + 2, N]$ only the backward connection 210 associated to the couple $(l, k)$.

In a **second non-illustrated embodiment,** the neural network according to the disclosure comprises, for one value of $l \in [1, N - 2]$ and for one value of $k \in [l + 2, N]$, only:

-   the backward connection 210 associated to the couple $(l, k)$; and

-   for one value of $k' \in [l + 1, N]$, the backward connection, 110 or 210, associated to the couple $(l, k')$.

In a **third non-illustrated embodiment,** the neural network according to the disclosure comprises, for one value of $l \in [1, N - 2]$ and for one value of $k \in [l + 2, N]$, only:

-   the backward connection associated to the couple $(l, k)$; and
-   for each possible value of $k'$ in $[l + 1, N]$, the backward connection, 110 or 210, associated to the couple $(l, k')$.

Referring now to **figure 3**, we illustrate the structural blocks of an exemplary device that can be used for implementing a neural network according to the disclosure.

In an embodiment, a device 300 for implementing the disclosed neural network comprises a non-volatile memory 303 (e.g. a read-only memory (ROM) or a hard disk), a volatile memory 301 (e.g. a random access memory or RAM) and a processor 302 (e.g. a general purpose processor, a graphics processing unit (GPU), a digital signal processor (DSP), a neural network processor, etc.). The non-volatile memory 303 is a non-transitory computer-readable carrier medium. It stores executable program code instructions, which are executed by the processor 302 in order to enable implementation of the neural network according to the disclosure in its various embodiment disclosed above in relationship with figure 2.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The neural network according to the disclosure may be implemented equally well:

•   by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or

•   by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but it may also be implemented in hardware form or any form combining a hardware portion and a software portion.

Referring now to **figure 4**, we illustrate a method for training the neural network of figure 2 according to one embodiment of the present disclosure.

In a **step S400**, a training sequence *l* is fed to an input of the layer of rank 1 of the neural network 200.

In a **step S410**, the training sequence *l* is propagated forwardly through layers of rank 1 to *k* in the set of N layers of the neural network 200, delivering at least:

- an output signal $H^k$ at an output of the layer of rank *k*; and,
- when *l* is greater than 1, an output signal $H^{l-1}$ at an output of a layer of rank *l* - 1;

For that, output signals $H^p$ are for instance calculated in a **sub-step S410a** at outputs of rank *p* layers following:

- $H^p = H^1 = S^1 ((W^1 l) + b^1)$ when *p* = 1; and
- $H^p = S^p ((W^p H^{p-1}) + b^p)$ for successive values of *p* starting from 2 up to *k*;

with:

- $W^p$ a weight matrix of the layer of rank *p*;
- $b^p$ an encoding offset of the layer of rank *p*; and
- $S^p$ an activation function of the layer of rank *p* applying a given activation function to each of the components of the argument of the activation function $S^p$.

For instance, the activation function belongs to the group comprising:

- a sigmoid function;
- a hyperbolic tangent function; and
- a rectified linear unit function.

The neural network 200 gets at least one backward connection 210 associated to the couple (*l*, *k*), with $l \in [1, N - 2]$ and $k \in [l + 2, N]$. Thus, in a **step S420**, an input signal $R_k^l$ at the input of the layer of rank *l* is estimated based on the output signal $H^k$ delivered at step S410, and based on a backward transfer function associated to the backward connection 210 associated to the couple (*l*, *k*). More particularly, the backward transfer function is a function at least of a *l*-th set of parameters characterizing the layer of rank *l*. For instance, the *l*-th set of parameters characterizing the layer of rank *l* comprises the weight matrix $W^l$, the encoding offset $b^l$, and the activation function $S^l$ as introduced above.

For estimating $R_k^l$, the input signal $R_k^p$ at the input of the layer of rank *p*, for *p* an integer lower than or equal to *k* and greater than *l*, is for instance estimated in a **sub-step S420a** based at least on:

- the output signal $H^k$ delivered at step S410; and

- a *p*-th decoding function estimating an input of the layer of rank *p* based on an output of the same layer of rank *p*.

More particularly, the *p*-th decoding function is also a function at least of the *p*-th set of parameters characterizing the layer of rank *p* and the input signal $R_k^p$ is estimated iteratively following:

- $$R_k^p = R_k^k = S^k \left( \left( (W^k)^T H^k \right) + b'^k \right) \text{ when } p = k; \text{ and}$$

- $$R_k^p = S^p \left( \left( (W^p)^T R_k^{p+1} \right) + b'^p \right) \text{ for successive values of } p \text{ starting from } k - 1 \text{ down to } l;$$

with $b'^p$ a decoding offset of the layer of rank *p* (the *p*-th set of parameters characterizing the layer of rank *p* also comprises the decoding offset $b'^p$).

The backward transfer function is thus estimated based on the decoding function of each of the layers between the considered layers of ranks *l* and *k*, resulting in a straightforward implementation. Furthermore, the disclosed method relies on the use of classical parameters of the layers and thus do not necessitate additional material.

In a **step S430**, an error signal $E_k(l)$ between the input signal $R_k^l$ and:

- the output signal $H^{l-1}$ when *l* is greater than 1; or
- the training sequence *l* when *l* is equal to 1,

is obtained for delivering a loss function $L(l)$ that is function at least of the error signal $E_k(l)$. For instance, $L(l) = E_k(l)$.

In a **step S440**, the *l*-th set of parameters characterizing the layer of rank *l* is adapted based on the loss function $L(l)$.

For that, the loss function $L(l)$ is optimized in a **sub-step S440a** for delivering a *l*-th adapted set of parameters. Such optimization is for instance based on a stochastic gradient descent method or on an Adam optimizer as detailed for instance in the article by Diederik Kingma and Jimmy Ba., "**Adam: A *method for stochastic optimization*,**" arXiv preprint arXiv:1412.6980, 2014.

As a result, the enforcement of the steps discussed above lead to the training of the neural network 200 despite the use of fewer training sequences compared to known techniques while improving the quality of the trained network at the end. This holds for all neural networks according to the disclosure, i.e. for all neural networks that comprise at least one backward connection 210 associated to the couple (*l*, *k*), with $l \in [1, N - 2]$ and $k \in [l + 2, N]$. This is also the case for instance when the neural network is implemented according to the first non-illustrated embodiment discussed above in relation with figure 2.

In variants, when the neural network according to the disclosure comprises at least one additional backward connection, 110 or 210, associated to the couple $(l, k')$ with $k' \in [l + 1, N]$ (e.g. when the neural network is implemented as the neural network 200 of figure 2, or according to the second non-illustrated embodiment discussed above in relation with figure 2), the method also enforces, for the couple $(l, k')$:

- the step S410 for propagating the training sequence $I$ up to the layer $k'$. It allows delivering an output signal $H^{k'}$ at an output of the layer of rank $k'$;
- the step S420 for estimating an input signal $R_{k'}^{l}$ at an input of the layer of rank $l$ based on the output signal $H^{k'}$ and on another backward transfer function associated to the backward connection, 110 or 210, associated with the couple $(l, k')$. In that case, this another backward transfer function is a function of at least the $l$-th set of parameters characterizing the layer of rank $l$; and
- the step S430 for obtaining another error signal $E_{k'}(l)$ between the input signal $R_{k'}^{l}$ and:

    - the output signal $H^{l-1}$ when $l$ is greater than 1; or
    - the training sequence $I$ when $l$ is equal to 1.

In that case, the loss function $L(l)$ adapted during step S440 is also a function of the error signal $E_{k'}(l)$. For instance, $L(l) = E_k(l) + E_{k'}(l)$.

Thus, the use of further backward connections toward the layer of rank $l$ allows improving further the training of that particular layer of rank $l$.

In variants, when the neural network according to the disclosure comprises all the backward connection(s), 110 or 210, associated to the couples $(l, k')$ for all $k' \in [l + 1, N]$ (e.g. when the neural network is implemented as the neural network 200 of figure 2, or according to the third non-illustrated embodiment discussed above in relation with figure 2), the steps S410, S420 and S430 are enforced for each of those backward connection(s), 110 or 210, associated to the couple(s) $(l, k')$ for all $k'$. Those steps thus deliver respectively a set of output signal(s) $H^{k'}$, a set of input signal(s) $R_{k'}^{l}$ and a set of error signal(s) $E_{k'}(l)$ for respective value(s) of $k'$. In that case, the loss function $L(l)$ adapted during step S440 is also a function of the error signal(s) $E_{k'}(l)$. For instance, the loss function $L(l)$ is equal to the sum of all the error signal terms $E_k(l)$ and $E_{k'}(l)$.

The use of all the backward connections that go toward the layer of rank $l$ allows improving further the training of the layer of rank $l$.

When the neural network according to the disclosure comprises backward connections, 110 or 210, that go toward the input of different layers of rank $l$, with $l \in [1, N - 2]$ as it is for instance for the neural network 200 of figure 2, the steps S410, S420 and S430 are enforced iteratively for each possible value of $l$ in decreasing order. More particularly, for a given possible value of $l$, the steps S410, S420 and S430 are enforced for:

- the backward connection 210 associated to the couple $(l, k)$, delivering respectively a set of output signals $H^k$, a set of input signals $R_k^l$ and a set of error signals $E_k(l)$ for respective values of $k$; and when existing
- each existing backward connection(s), 110 or 210, associated to the couple(s) $(l, k')$, delivering respectively a set of output signal(s) $H^{k'}$, a set of input signal(s) $R_{k'}^{l}$ and a set of error signal(s) $E_{k'}(l)$ for respective value(s) of $k'$.

In that case, the loss function $L(l)$ adapted during step S440 is also function of the error signals $E_k(l)$ and $E_{k'}(l)$. For instance, the loss function $L(l)$ is equal to the sum of all the error signal terms $E_k(l)$ and $E_{k'}(l)$.

Due to the backpropagation of the error signal for optimizing the parameters of the layer in the disclosed method, the adaptation of the parameters of a layer of given rank takes advantage of the former adaptation of the parameters of a layer of higher rank. The training is thus further improved.

In some embodiments, the steps S400, S410, S420, S430 and S440 are enforced iteratively for successive training sequences. More particularly, for enforcing those steps, the $l$-th set of parameters characterizing the layer of rank $l$ is initialized to:

- default values for the first iteration of the method; and
- the $l$-th adapted set of parameters for the enforcement of a next iteration of the method.

For instance, the weight matrices are initialized with random values, and the decoding and encoding offsets are initialized to zero for the first iteration.

Referring now to **figure 5**, we illustrate the structural blocks of an exemplary device that can be used for implementing the method for training the neural network according to the disclosure (according to any of the embodiments disclosed above).

In an embodiment, a device 500 for implementing the disclosed method comprises a non-volatile memory 503 (e.g. a read-only memory (ROM) or a hard disk), a volatile memory 501 (e.g. a random access memory or RAM) and a processor 502. The non-volatile memory 503 is a non-transitory computer-readable carrier medium. It stores executable program code instructions, which are executed by the processor 502 in order to enable implementation of the method described above (method for training a neural network according to the disclosure) in its various embodiment disclosed in relationship with figure 4.

Upon initialization, the aforementioned program code instructions are transferred from the non-volatile memory 503 to the volatile memory 501 so as to be executed by the processor 502. The volatile memory 501 likewise includes registers for storing the variables and parameters required for this execution.

All the steps of the above method for training a neural network according to the disclosure may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or

- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the device 500 for implementing the disclosed method for training a neural network according to the disclosure (in its various embodiment disclosed in relationship with figure 4) is the same device as the device 300 for implementing the neural network according to the disclosure (in its various embodiment disclosed above in relationship with figure 2).

**Claims**

1. Device (300) comprising a processor (302) or a dedicated computing machine configured for implementing a neural network (200) comprising a set of N layers of nodes, N being an integer greater than or equal to 3,
   an output of at least one node of a layer of rank $i$ in said set of N layers being connected to an input of at least one node of a layer of rank $i + 1$ in said set of N layers, $i$ an integer verifying $i \in [1, N[$, **characterized in that** for at least one value of an integer $l$ verifying $l \in [1, N - 2]$, said neural network also comprises, for at least one couple $(l, k)$, $k$ an integer verifying $k \in [l + 2, N]$, a backward connection (210) connecting:

   - an output of a layer of rank $k$ in said set of N layers; toward
   - an input of a layer of rank $l$ in said set of N layers.

2. Device according to claim 1,
   wherein said neural network also comprises, for at least one couple $(l, k')$, $k'$ an integer different from $k$ and verifying $k' \in [l + 1, N]$, a backward connection (110, 210) connecting:

   - an output of a layer of rank $k'$ in said set of N layers; toward
   - said input of said layer of rank $l$ in said set of N layers.

3. Device according to claim 2,
   wherein said neural network comprises:

   - said backward connection associated to said couple $(l, k)$; and
   - for each possible value of $k'$ in $[l + 1, N]$, said backward connection associated to said couple $(l, k')$.

4. Device according to any of the claims 1 to 3,
   wherein said neural network comprises, for each possible value of $l$ in $[1, N - 2]$:

   - said backward connection associated to said couple $(l, k)$, and when existing
   - said backward connections associated to said couple(s) $(l, k')$ according to claim 2 or 3.

5. Method for training a neural network (200) implemented in a device (300) according to any of the claims 1 to 4,
   **characterized in that** it comprises, for said at least one couple $(l, k)$:

   - Feeding (S400) a training sequence $I$ to an input of a layer of rank 1 in said set of N layers of nodes;
   - Propagating (S410) said training sequence $I$ forwardly through layers of rank 1 to $k$ in said set of N layers, delivering at least:
   - an output signal $H^k$ at an output of said layer of rank $k$; and,
   - when $l$ is greater than 1, an output signal $H^{l-1}$ at an output of a layer of rank $l - 1$;

   - Estimating (S420) at least an input signal $R_k^l$ at an input of said layer of rank $l$ based on said output signal $H^k$ and on a backward transfer function associated to said backward connection associated to said at least one couple $(l, k)$, said backward transfer function being a function at least of a $l$-th set of parameters characterizing said layer of rank $l$;
   - Obtaining (S430) at least an error signal $E_k(l)$ between said input signal $R_k^l$ and:

- said output signal $H^{l-1}$ when $l$ is greater than 1; or
- said training sequence $l$ when $l$ is equal to 1,

delivering a loss function that is function at least of said error signal $E_k(l)$; and

- Adapting (S440) at least said $l$-th set of parameters characterizing said layer of rank $l$ by optimization (S440a) of said loss function, delivering a $l$-th adapted set of parameters.

6. Method according to claim 5,
wherein said estimating comprises, for $p$ an integer lower than or equal to $k$ and greater than $l$, an estimation (S420a) of an input signal $R_k^p$ at an input of a layer of rank $p$ based at least on:

- said output signal $H^k$; and
- a $p$-th decoding function estimating an input of said layer of rank $p$ based on an output of said layer of rank $p$,

said $p$-th decoding function being a function at least of a $p$-th set of parameters characterizing said layer of rank $p$.

7. Method according to claim 6
wherein said input signal $R_k^p$ is estimated iteratively following:

-  $$R_k^p = R_k^k = S^k \left( \left( \left( W^k \right)^T H^k \right) + b'^k \right)$$
when $p = k$; and
-  $$R_k^p = S^p \left( \left( \left( W^p \right)^T R_k^{p+1} \right) + b'^p \right)$$ for successive values of p starting from $k - 1$ down to $l$;

with:

- $W^p$ a weight matrix of the layer of rank $p$;
- $b'^p$ a decoding offset of the layer of rank $p$; and
- $S^p$ an activation function of the layer of rank $p$ applying a given activation function to each of the components of the argument of said activation function $S^p$;

said $p$-th set of parameters characterizing said layer of rank $p$ comprising said weight matrix $W^p$, said decoding offset $b'^p$ and said activation function $S^p$.

8. Method according to claim 7,
wherein said propagating comprises calculating (S410a) iteratively output signals $H^p$ at outputs of rank $p$ layers following:

- $H^p = H^1 = S^1 \left( \left( W^1 I \right) + b^1 \right)$ when $p = 1$; and
- $H^p = S^p \left( \left( W^p H^{p-1} \right) + b^p \right)$ for successive values of $p$ starting from 2 up to $k$;

with:

- $W^p$ said weight matrix of the layer of rank $p$;
- $b^p$ an encoding offset of the layer of rank $p$; and
- $S^p$ said activation function of the layer of rank $p$;

said p-th set of parameters characterizing said layer of rank $p$ also comprising said encoding offset $b^p$.

9. Method according to any one of the claims 5 to 8
wherein said neural network is implemented in a device according to claim 2,
and wherein, for said at least one couple $(l, k')$:

- said propagating also delivers an output signal $H^{k'}$ at an output of said layer of rank $k'$;
- said estimating also comprises estimating an input signal $R_{k'}^l$ at an input of said layer of rank $l$ based on said output signal $H^{k'}$ and on another backward transfer function associated to said backward connection associated with said at least one couple $(l, k')$,
said another backward transfer function being a function of at least said $l$-th set of parameters characterizing said layer of rank $l$; and
- said obtaining also comprises obtaining another error signal $E_{k'}(l)$ between said input signal $R_{k'}^l$ and:

- said output signal $H^{l-1}$ when $l$ is greater than 1; or
- said training sequence $l$ when $l$ is equal to 1;

said loss function being also function of said another error signal $E_{k'}(l)$.

10. Method according to claim 9
wherein said neural network is implemented in a device according to claim 3,
and wherein said propagating, said estimating and said obtaining are enforced for each of said backward connection(s) associated to the couple(s) $(l, k')$, delivering respectively a set of output signal(s) $H^{k'}$, a set of input signal(s) $R_{k'}^l$ and a set of error signal(s) $E_{k'}(l)$ for respective value(s) of $k'$,
said loss function being also function of said error signal(s) $E_{k'}(l)$.

11. Method according to any one of the claims 5 to 10
wherein said adapting said $l$-th set of parameters characterizing said layer of rank $l$ comprises the optimization of said loss function enforcing a stochastic gradient descent method or an Adam optimizer for delivering said $l$-th adapted set of parameters.

12. Method according to any one of the claims 5 to 11, wherein the steps of claims 5 to 11 are enforced iteratively for successive training sequences, said $l$-th set of parameters characterizing said layer of rank $l$ being initialized to:

- default values for the first iteration of the method; and
- said $l$-th adapted set of parameters for the enforcement of a next iteration of the method.

13. Method according to any one of the claims 5 to 12, wherein said neural network is implemented in a device according to claim 4, wherein said propagating, said estimating and said obtaining are enforced iteratively for each possible value of $l$ in decreasing order, and wherein, for a given possible value of $l$, said propagating, said estimating and said obtaining are enforced for:

- each said backward connection associated to the couple $(l, k)$, delivering respectively a set of output signals $H^k$, a set of input signals $R_k^l$ and a set of error signals $E_k(l)$ for respective values of $k$; and when existing
- each of said backward connection(s) associated to the couple(s) $(l, k')$, delivering respectively a set of output signal(s) $H^{k'}$, a set of input signal(s) $R_{k'}^l$ and a set of error signal(s) $E_{k'}(l)$ for respective value(s) of $k'$;

said loss function being also function of said error signals $E_k(l)$ and $E_{k'}(l)$.

14. Computer program product **characterized in that** it comprises program code instructions for implementing the neural network implemented in a device according to at least one of the claims 1 to 4 and/or for implementing the method according to at least one of the claims 5 to 13, when said program is executed on a computer or a processor.

15. A device (500, 300) for training a neural network (200) implemented in a device (300) according to any of the claims 1 to 4, **characterized in that** it comprises a processor (502) or a dedicated computing machine configured for:

- Feeding a training sequence $I$ to an input of a layer of rank 1 in said set of N layers of nodes;

- Propagating said training sequence $I$ forwardly through layers of rank 1 to $k$ in said set of N layers, delivering at least:

- an output signal $H^k$ at an output of said layer of rank $k$; and,
- when $l$ is greater than 1, an output signal $H^{l-1}$ at an output of a layer of rank $l$ - 1;

- Estimating at least an input signal $R_k^l$ at an input of said layer of rank $l$ based on said output signal $H^k$ and on a backward transfer function associated to said backward connection associated to said at least one couple $(l, k)$, said backward transfer function being a function at least of a $l$-th set of parameters characterizing said layer of rank $l$;
- Obtaining at least an error signal $E_k(l)$ between said input signal $R_k^l$ and:

- said output signal $H^{l-1}$ when $l$ is greater than 1; or
- said training sequence $I$ when $l$ is equal to 1, delivering a loss function that is function at least of said error signal $E_k(l)$; and

- Adapting at least said $l$-th set of parameters characterizing said layer of rank $l$ by optimization of said loss function, delivering a $l$-th adapted set of parameters.

Figure 1

200

Layer N

Layer 4

110

Layer 3

110

Layer 2

110

Layer 1

-----> = 210

**Figure 2**

**Figure 4**

**Figure 3**

**Figure 5**

Europäisches
Patentamt

European
Patent Office

Office européen
des brevets

# EUROPEAN SEARCH REPORT

Application Number

EP 17 30 6832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Xiaojie Jin ET AL: "Multi-Path Feedback Recurrent Neural Network for Scene Parsing", , 9 February 2017 (2017-02-09), XP055481102, Retrieved from the Internet: URL:https://www.aaai.org/ocs/index.php/AAAI/AAAI17/paper/viewFile/14294/14286 [retrieved on 2018-06-05] * abstract; figure 2; table 1 * * page 4096, left-hand column, line 1 - page 4100, right-hand column, line 2 * | 1-15 | INV. G06N3/04 G06N3/08 |
| A | US 2008/005048 A1 (WENG JUYANG [US]) 3 January 2008 (2008-01-03) * abstract; claims 1,9; figures 1,5 * * paragraph [0037] - paragraph [0040] * * paragraph [0080] - paragraph [0091] * | 1-15 | |
| A | YUHUA ZHENG ET AL: "Fusing bottom-up and top-down pathways in neural networks for visual object recognition", NEURAL NETWORKS (IJCNN), THE 2010 INTERNATIONAL JOINT CONFERENCE ON, IEEE, PISCATAWAY, NJ, USA, 18 July 2010 (2010-07-18), pages 1-8, XP031771462, ISBN: 978-1-4244-6916-1 * abstract; figures 1,2 * * section I * * section II * * section III * | 1-15 | TECHNICAL FIELDS SEARCHED (IPC) G06N |
| A | CN 106 295 800 A (UNIV BEIJING TECHNOLOGY) 4 January 2017 (2017-01-04) -/-- | 1-15 | |

The present search report has been drawn up for all claims

| Place of search | Date of completion of the search | Examiner |
|---|---|---|
| The Hague | 6 June 2018 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 30 6832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & US 2018/029900 A1 (HAN HONGGUI [CN] ET AL) 1 February 2018 (2018-02-01)<br>* abstract; figure 1 *<br>* paragraph [0002] - paragraph [0005] *<br>* paragraph [0010] - paragraph [0024] *<br>* paragraph [0035] - paragraph [0056] *<br>----- | | |

TECHNICAL FIELDS
SEARCHED      (IPC)

The present search report has been drawn up for all claims

| Place of search | Date of completion of the search | Examiner |
|---|---|---|
| The Hague | 6 June 2018 | Totir, Felix |

EPO FORM 1503 03.82 (P04C01)

# EP 3 502 973 A1

## ANNEX TO THE EUROPEAN SEARCH REPORT
## ON EUROPEAN PATENT APPLICATION NO.

EP 17 30 6832

This annex lists the patent family members relating to the patent documents cited in  the above-mentioned European search report.
The members are as contained in the European Patent Office EDP file on
The European Patent Office is in no way liable for these particulars which are merely given for the purpose of information.

06-06-2018

| Patent document cited in search report | Publication date | Patent family member(s) | Publication date |
|---|---|---|---|
| US 2008005048 A1 | 03-01-2008 | NONE | |
| CN 106295800 A | 04-01-2017 | CN 106295800 A<br>US 2018029900 A1 | 04-01-2017<br>01-02-2018 |

EPO FORM P0459

For more details about this annex : see Official Journal of the European Patent Office, No. 12/82

# EP 3 502 973 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BENGIO, Y. ; LAMBLIN, P. ; POPOVICI, D. ; LARO- CHELLE, H.** Greedy layer-wise training of deep networks. *Advances in neural information processing systems,* 2007, vol. 19 (19), 153
- Extracting and composing robust features with denoising autoencoders. **VINCENT, P. ; LARO- CHELLE H. ; BENGIO Y. ; MANZAGOL P.A.** international conference on Machine learning. ACM, 2008
- **QI, Y. ; WANG, Y. ; ZHENG, X. ; WU, Z.** Robust feature learning by stacked autoencoder with maximum correntropy criterion. *IEEE International Conference on Acoustics, Speech and Signal Processing (ICAS-SP),* 2014, 6716-6720